# EUROPEAN PATENT SPECIFICATION

(11) **EP 2 446 563 B1**
(45) Date of publication and mention of the grant of the patent: **12.06.2013**
(21) Application number: 09779868.0
(22) Date of filing: 22.06.2009
(51) Int. Cl.: H04B 10/272, H04B 10/50, H04J 14/02

(54) **MODE-HOP PREVENTION IN A TUNABLE LASER OF AN OPTICAL NETWORK ELEMENT**
VERHINDERUNG VON MODENSPRÜNGEN BEI EINEM ABSTIMMBAREN LASER EINES OPTISCHEN NETZWERKELEMENTS
PRÉVENTION DE SAUT DE MODE DANS UN LASER ACCORDABLE D'UN ÉLÉMENT DE RÉSEAU OPTIQUE

(43) Date of publication of application: 02.05.2012
(73) Proprietor: Nokia Siemens Networks Oy, 02610 Espoo (FI)
(72) Inventor: GOTTWALD, Erich, 83607 Holzkirchen (DE); ROHDE, Harald, 81673 München (DE); TREYER, Thomas, 81379 München (DE)
(86) International application number: PCT/EP2009/057732
(87) International publication number: WO 2010/149198

(56) References cited:
- EP-A2- 0 951 112
- EP-A2- 2 071 683
- GB-A- 2 412 230
- US-A1- 2006 193 354
- US-B1- 6 324 193
- ACKERMAN D A ET AL: "Wavelength, modal and power stabilization of tunable electro-absorption modulated, distributed bragg reflector lasers" SEMICONDUCTOR LASER CONFERENCE, 2000. CONFERENCE DIGEST. 2000 IEEE 17T H INTERNATIONAL 25-28 SEPT. 2000, PISCATAWAY, NJ, USA,IEEE, 25 September 2000 (2000-09-25), pages 49-50, XP010521515 ISBN: 978-0-7803-6259-8

## Description

The invention relates to a method for data processing in an optical network element and to such an optical network element. Furthermore, an optical communication system comprising at least one such optical network element is suggested.

A passive optical network (PON) is a promising approach regarding fiber-to-the-home (FTTH), fiber-to-the-business (FTTB) and fiber-to-the-curb (FTTC) scenarios, in particular as it overcomes the economic limitations of traditional point-to-point solutions.

Several PON types have been standardized and are currently being deployed by network service providers worldwide. Conventional PONs distribute downstream traffic from the optical line terminal (OLT) to optical network units (ONUs) in a broadcast manner while the ONUs send upstream data packets multiplexed in time to the OLT. Hence, communication among the ONUs needs to be conveyed through the OLT involving electronic processing such as buffering and/or scheduling, which results in latency and degrades the throughput of the network.

In fiber-optic communications, wavelength-division multiplexing (WDM) is a technology which multiplexes multiple optical carrier signals on a single optical fiber by using different wavelengths (colors) of laser light to carry different signals. This allows for a multiplication in capacity, in addition to enabling bidirectional communications over one strand of fiber.

WDM systems are divided into different wavelength patterns, conventional or coarse and dense WDM. WDM systems provide, e.g., up to 16 channels in the 3rd transmission window (C-band) of silica fibers of around 1550 nm. Dense WDM uses the same transmission window but with denser channel spacing. Channel plans vary, but a typical system may use 40 channels at 100 GHz spacing or 80 channels with 50 GHz spacing. Some technologies are capable of 25 GHz spacing. Amplification options enable the extension of the usable wavelengths to the L-band, more or less doubling these numbers.

Optical access networks, e.g., a coherent Ultra-Dense Wavelength Division Multiplex (UDWDM) network, are deemed to be the future data access technology.

Upstream signals may be combined by using a multiple access protocol, e.g., invariable time division multiple access (TDMA). The OLTs "range" the ONUs in order to provide time slot assignments for upstream communication. Hence, an available data rate is distributed among many subscribers. Therefore, each ONU needs to be capable of processing much higher than average data rates. Such an implementation of an ONU is complex and costly.

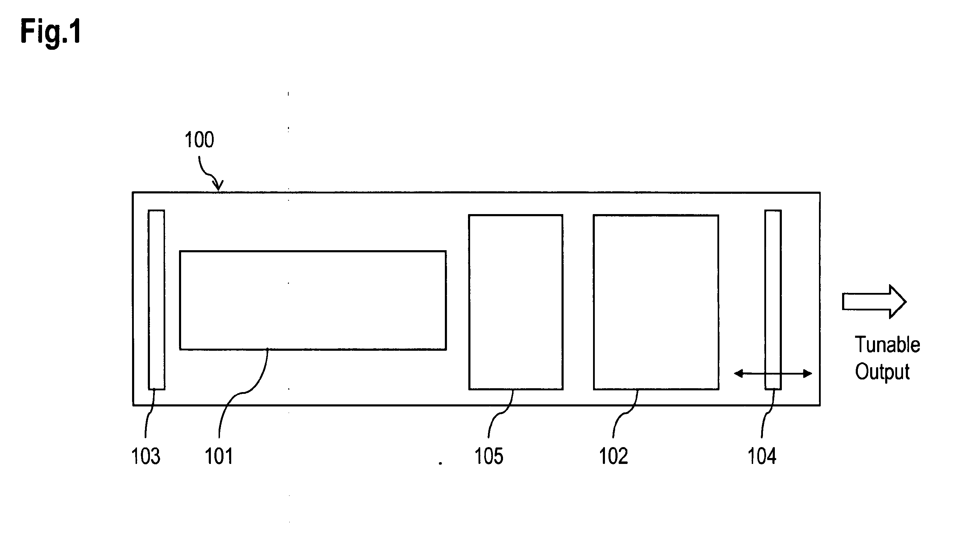

In order to provide a more cost efficient approach, for the purpose of coherent detection, the ONU may be equipped with a less complex and inexpensive local oscillator laser that is tunable over a wide wavelength range, e.g., the C-band (> 4 THz scanning range). However, such less complex tunable lasers with external tunable feedback bear the disadvantage of mode-hops when being tuned. Fig.1 shows a schematic of a generic tunable single-frequency laser 100 comprising a gain 101, a mode-selection filter 102, a phase shifter 105 and two mirrors 103, 104. The mode-selection filter 102 allows frequency tuning of the laser.

Because of the dense channel spacing in UDWDM systems amounting to the order of a few GHz, the probability of mode-hops while locking to a channel or tracking a channel is considerably high. Operating the laser at a frequency range close to such mode-hop avoids a stable long term operation and may further result in a phase noise degrading bit error rate. Tuning such laser by merely using the mode-selection filter 102 results in mode-hops and therefore hops in frequency. This may lead to an interruption of the data stream, which is perceivable to a user.

On the other hand, synchronizing the phase shifter 105 of the single-frequency laser while tuning the mode selection filter 102 would require an exact knowledge of characteristics of the laser regarding a huge set of parameters like, e.g., temperature, spectral position of the filter, laser current, etc. In case one of such parameters is not monitored and/or not controlled accordingly, any synchronized tuning avoiding said mode-hops is not possible.

The **problem** to be solved is to overcome the disadvantages stated above and in particular to provide a cost-efficient ONU implementation utilizing an inexpensive local oscillator laser and avoiding or reducing re-synchronization due to mode-hops.

In prior art several control techniques for controlling tunable lasers are disclosed. E.g. EP 2071683 A2 describes a laser device and a controlling method therefore to adjust the phase in a wavelength tunable laser. EP 0951112 A2 describes a tunable laser source apparatus having wideband oscillation wavelength continuous sweep function.

In additional prior art documents techniques are disclosed how to avoid mode-hops in tunable lasers. E.g. US 6324193 B1 describes the fine-control means for a continuously wavelength-tunable mono mode laser source. Another patent GB 2412230A discloses a laser calibration, monitoring and control method, which may be used to prevent mode-hopping. However none of the prior art documents discloses the inventive method and device according to the invention in this application.

This problem is solved according to the features of the independent claims. Further embodiments result from the depending claims.

In order to overcome this problem, a method for data processing in an optical network element is provided
- wherein an event of a forthcoming mode-hop of a tunable laser is detected.

According to an embodiment, a frequency of the tunable laser is adjusted based on the forthcoming mode-hop detected.

Hence, based on such event of the forthcoming mode-hop detected, the frequency of the tunable laser can be adjusted in time prior to the actual mode-hop. This advantageously avoids any outage that would deteriorate a user's experience. Hence, advantageously, less complex tunable lasers can be utilized, which allows for a cost-efficient implementation of the optical network element.

Said forthcoming mode-hop of the tunable laser is detected by monitoring a phase noise and/or amplitude noise of the tunable laser, and by monitoring a bit-error rate.

In a further embodiment, said forthcoming mode-hop of the tunable laser is detected by monitoring a control signal of a Costas loop and/or any carrier tracking loop.

In a next embodiment, said forthcoming mode-hop of the tunable laser is detected by monitoring an amplitude noise via a photodiode.

It is also an embodiment that said forthcoming mode-hop of the tunable laser is detected by monitoring a signal reflected and mixed with light from the local oscillator in the electrical domain, in particular in an electrical frequency domain.

Pursuant to another embodiment, said forthcoming mode-hop of the tunable laser is detected by monitoring an electrical power at a bandwidth range that does not overlap with the signal.

According to an embodiment, the OLT is informed about the forthcoming mode-hop after the event has been detected.

Such information can be signaled towards the OLT from an ONU. Hence, the centralized OLT can advantageously conduct steps to be required for efficiently adjusting parameters at the ONU. In particular, a smooth adjustment prior to reaching an actual mode-hop can be provided.

According to another embodiment, the OLT buffers data (at least) until the frequency of the tunable laser is adjusted.

When establishing signaling between ONU and OLT (with or without acknowledgement), the OLT is aware of the adjustment(s) to be conducted at the ONU and may thus buffer data accordingly. After such adjustment, the ONU may indicate to the OLT to convey the data buffered. As an alternative, the OLT may automatically convey such data after a predetermined period of time (which may be indicated by a lapsing timer at the OLT). In this case, the ONU does not have to provide any further signaling to the OLT to indicate that the adjustment has been concluded.

In yet another embodiment, the frequency of the tunable laser is adjusted via a coarse adjustment and a subsequent fine tuning of said frequency.

In particular, such two-stage processing is of advantage as it allows for a fast and efficient adjustment of the tunable laser's frequency. The adjustment may in particular result in a target frequency which is within a safe zone afar from a mode-hop boundaries.

According to a next embodiment, the frequency of the tunable laser is adjusted by utilizing at least one of the following steps:
- adjusting a mode of a filter of the tunable laser;
- adjusting a current of the tunable laser;
- adjusting a temperature of the tunable laser.

Hence, the coarse adjustment may comprise said adjusting of the tunable laser's filter and the fine tuning may comprise said adjusting of the current of the tunable laser.

Pursuant to yet an embodiment, the optical network element is an ONU or an OLT.

The problem stated above is also solved by a device comprising and/or being associated with a processor unit and/or a hard-wired circuit and/or a logic device that is arranged such that the method as described herein is executable thereon.

Also, the problem stated supra can be solved by an optical network element comprising
- a tunable laser,
- a mode-hop detector that is arranged to detect an event of a forthcoming mode-hop of the tunable laser.

According to an embodiment, the optical network element comprises a tuning control unit that is used for adjusting at least one parameter of the tunable laser.

Such tunable control unit may be connected to the mode-hop detector to adjust the at least one parameter of the tunable laser based on an forthcoming mode-hop detected by said mode-hop detector.

The mode-hop detector may indicate the event of a forthcoming mode-hop to the tuning control unit.

It is noted that the tuning control unit and/or the mode-hop detector may be deployed with the tunable laser. They may or may not be implemented as separate entities, they may be functionally associated with either one or any other component of the optical network element.

According to an embodiment, the mode-hop detector and/or the tuning control unit are arranged such that the method as described herein can be executed.

The problem stated supra is further solved by an optical communication system comprising the one optical network element as described herein.

Embodiments of the invention are shown and illustrated in the following figure:

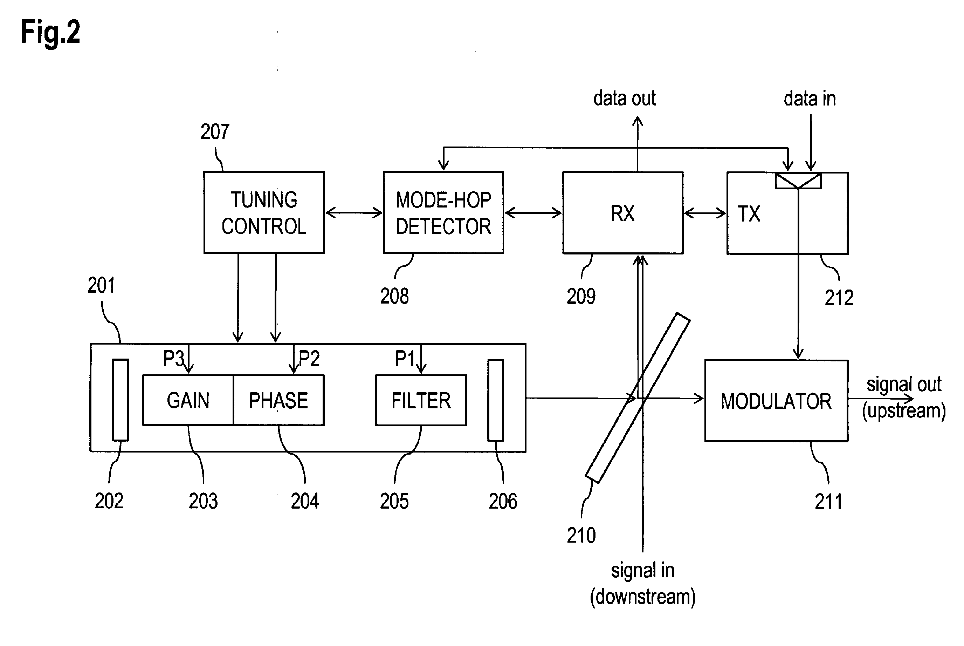

- Fig.2: shows a block diagram of a schematic realization of a ONU utilizing a local oscillator laser.

The approach presented herein allows for "synchronized" mode-hops and sets tuning parameters of a laser such that in an frequency range with sufficient width around a data channel no mode-hops will occur.

Fig.2 shows a block diagram of a schematic realization of a ONU utilizing a local oscillator laser 201.

The local oscillator laser 201 comprises a mirror 202, a gain 203, a phase shifter 204, a filter 205 (e.g., a mode-selection filter) and a mirror 206 that allows partial transmission of an optical signal towards another partially transmitting mirror 210. The signal from the local oscillator laser 201 is fed to a receiver 209 and to a modulator 211.

A downstream incoming signal is directed via said mirror 210 to the receiver 209 and further (after being processed by said receiver 209) an output data signal "data out" is provided by said ONU.

Incoming data "data in" is processed at a transmitter 212 and fed to a modulator 211, where it is modulated together with the signal from the local oscillator laser 201 and conveyed via an upstream outgoing signal towards the OLT (not shown in Fig.2).

In addition, a mode-hop detector 208 is provided that is connected to the receiver 209, to a tuning control 207 as well as to the transmitter 212.

The tuning control 207 may adjust at least two parameters of the local oscillator laser 201 (indicated by two arrows pointing towards the local oscillator laser 201). The local oscillator laser comprises three exemplary parameter P1, P2 and P3, wherein said parameter P3 is used for adjusting the gain 203, the parameter P2 is used for adjusting the phase shifter 204 and the parameter P1 is used for adjusting the filter 205.

A wavelength (frequency) of a wide range tunable laser depends on at least two parameters. For example, a parameter P1 adjusts settings of an external cavity filter and a parameter P2 adjusts tuning ranges within one mode. The tuning ranges of parameters P1 and P2 may overlap.

Under long-term conditions pursuant to temperature drifts or based on tracking drifts of the channel wavelength, the laser 201 reaches a boundary of a "safe" tuning range. Hence, at such boundary of a tuning range, the risk of losing synchronization and thus the risk of an interruption of data processing significantly increases. Such boundary can be determined in advance and/or it can be dynamically set based on past re-synchronization events.

Reaching the boundary of such safe tuning range, the ONU may indicate (e.g., by in-band signaling) to the OLT that the laser parameters need to be adjusted and a new locking is required. This may cause a short outage in data transmission, which may advantageously be buffered at the OLT. Due to the shortness of the outage, the data may be buffered without having to provide for significant memory space at the OLT. Also, the shortness of the outage may be beyond user's perception, i.e. the service provided to the user is rather continuous, the (short) outage can be well compensated by said means of buffering. In other words, the anticipation of a forthcoming mode-hop avoids rather tedious re-synchronization combined with an outage that would deteriorate the user's experience.

Based on such indication by the ONU, the OLT may perform necessary steps to support such a re-synchronization.

Hence, the approach provided herein in particular supports a detection of a forthcoming mode-hop, signaling such event to the OLT and readjusting the ONU in a controlled manner without any loss of synchronization and connection. Preferably, no outage perceivable to the user will occur and the user experience may not suffer due to such adjustment of parameters.

It is a significant advantage that this approach allows utilization of less complex and inexpensive lasers at the ONU, which leads to a significant cost saving regarding the implementation of the ONU.

Advantageously, any forthcoming mode-hop is to be detected in time. A mode-hop may be detected based on increasing phase noise and/or based on amplitude noise of the tunable laser. Hence, a bit-error rate or a control signal of a Costas loop (e.g., in case of heterodyne detection of DQPSK) or any other carrier tracking loop at the receiver site can be utilized for detecting such forthcoming mode-hop. Such scenarios may be applicable in case the laser is locked to the signal while tracking is conducted.

In case of scanning of the local oscillator (i.e., in case the laser is not locked to a received signal) other measures may be utilized, e.g., detecting an amplitude noise via a photodiode or analyzing the signal caused by back reflected light mixed with light from the local oscillator in the electrical frequency range close to zero, e.g., by monitoring the electrical power within a bandwidth interval not overlapping with that occupied by the signal.

### List of Abbreviations:

| | |
|---|---|
| CWDM | Coarse WDM |
| LO | (optical) Local Oscillator |
| OLT | Optical Line Terminal |
| ONT | Optical Network Termination |
| ONU | Optical Network Unit |
| PD | Photo Diode |
| PM | Phase Modulation unit |
| PON | Passive Optical Network |
| UDWDM | Ultra Dense WDM |
| WDM | Wavelength Division Multiplex |

## Claims

1. A method for data processing in an optical network element,
- wherein an event of a forthcoming mode-hop of a tunable laser (201,207) is detected,
- wherein a frequency of the tunable laser is adjusted based on the forthcoming mode-hop detected,
- wherein said forthcoming mode-hop of the tunable laser (201,207) is detected by monitoring a phase noise and/or amplitude noise of the tunable laser and
- wherein said forthcoming mode-hop of the tunable laser (201,207) is detected by monitoring a bit-error rate.

2. The method according to claim 1, wherein said forthcoming mode-hop of the tunable laser (201) is detected by at least one of the following:
- by monitoring a control signal of a Costas loop and/or any carrier tracking loop;
- by monitoring an amplitude noise via a photodiode;
- by monitoring a signal reflected and mixed with light from the local oscillator in the electrical domain, in particular in an electrical frequency domain;
- by monitoring an electrical power at a bandwidth range that does not overlap with the signal.

3. The method according to any of the preceding claims, wherein the OLT is informed about the forthcoming mode-hop after the event has been detected.

4. The method according to claim 3, wherein the OLT buffers data until the frequency of the tunable laser (201) is adjusted.

5. The method according to any of the preceding claims, wherein the frequency of the tunable laser (201) is adjusted via a coarse adjustment and a subsequent fine tuning of said frequency.

6. The method according to any of the preceding claims, wherein the frequency of the tunable laser (201) is adjusted by utilizing at least one of the following steps:
- adjusting a mode of a filter (205) of the tunable laser (201);
- adjusting a current of the tunable laser (201);
- adjusting a temperature of the tunable laser (201).

7. The method according to any of the preceding claims, wherein the optical network element is an ONU or an OLT.

8. An optical network element comprising
- a tunable laser (201),
- a mode-hop detector (208) that is arranged to detect an event of a forthcoming mode-hop of the tunable laser (201),
- a tuning control unit (207) that is used for adjusting at least one parameter of the tunable laser (201) and
wherein the mode-hop detector (208) and/or the tuning control unit (207) are configured in such a way, that a forthcoming mode-hop of the tunable laser (201) is detected by monitoring a bit-error rate and the tuning control unit (207) can adjust the laser frequency in time prior to the actual mode-hop.

9. An optical communication system comprising at least one optical network element according to claim 8.

## Patentansprüche

1. Verfahren zur Datenverarbeitung in einem optischen Netzwerkelement,
- wobei ein Ereignis eines bevorstehenden Modensprungs eines abstimmbaren Lasers (201, 207) detektiert wird,
- wobei eine Frequenz des abstimmbaren Lasers auf der Basis des detektierten bevorstehenden Modensprungs eingestellt wird,
- wobei der bevorstehende Modensprung des abstimmbaren Lasers (201, 207) durch Überwachen eines Phasenrauschens und/oder eines Amplitudenrauschens des abstimmbaren Lasers detektiert wird und
- wobei der bevorstehende Modensprung des abstimmbaren Lasers (201, 207) durch Überwachen einer Bitfehlerrate detektiert wird.

2. Verfahren nach Anspruch 1, wobei der bevorstehende Modensprung des abstimmbaren Lasers (201) durch mindestens einen der folgenden Punkte detektiert wird:
- durch Überwachen eines Steuersignals einer Costas-Schleife und/oder einer beliebigen Trägerverfolgungsschleife;
- durch Überwachen eines Amplitudenrauschens über eine Photodiode;
- durch Überwachen eines reflektierten und mit Licht von dem Ortsoszillator in dem elektrischen Bereich, insbesondere in einem elektrischen Frequenzbereich, gemischten Signals;
- durch Überwachen einer elektrischen Leistung bei einem Bandbreitenbereich, der das Signal nicht überlappt.

3. Verfahren nach einem der vorhergehenden Ansprüche, wobei das OLT über den bevorstehenden Modensprung informiert wird, nachdem das Ereignis detektiert worden ist.

4. Verfahren nach Anspruch 3, wobei das OLT Daten puffert, bis die Frequenz des abstimmbaren Lasers (201) eingestellt ist.

5. Verfahren nach einem der vorhergehenden Ansprüche, wobei die Frequenz des abstimmbaren Lasers (201) über eine Grobeinstellung und eine nachfolgende Feinabstimmung der Frequenz eingestellt wird.

6. Verfahren nach einem der vorhergehenden Ansprüche, wobei die Frequenz des abstimmbaren Lasers (201) durch Einsatz mindestens eines der folgenden Schritte eingestellt wird:
- Einstellen einer Mode eines Filters (205) des abstimmbaren Lasers (201);
- Einstellen eines Stroms des abstimmbaren Lasers (201);
- Einstellen einer Temperatur des abstimmbaren Lasers (201).

7. Verfahren nach einem der vorhergehenden Ansprüche, wobei das optische Netzwerkelement eine ONU oder ein OLT ist.

8. Optisches Netzwerkelement, das Folgendes umfasst:
- einen abstimmbaren Laser (201),
- einen Modensprungdetektor (208), der ausgelegt ist zum Detektieren eines Ereignisses eines bevorstehenden Modensprungs des abstimmbaren Lasers (201),
- eine Abstimmungssteuereinheit (207), die zum Einstellen mindestens eines Parameters des abstimmbaren Lasers (201) verwendet wird, und
wobei der Modensprungdetektor (208) und/oder die Abstimmungssteuereinheit (207) derart konfiguriert sind, dass ein bevorstehender Modensprung des abstimmbaren Lasers (201) durch Überwachen einer Bitfehlerrate detektiert wird und die Abstimmungssteuereinheit (207) die Laserfrequenz rechtzeitig vor dem eigentlichen Modensprung einstellen kann.

9. Optisches Kommunikationssystem, das mindestens ein optisches Netzwerkelement nach Anspruch 8 umfasst.

## Revendications

1. Un procédé de traitement de données dans un élément de réseau optique,
- dans lequel un événement d'un saut de mode à venir d'un laser accordable (201, 207) est détecté,
- dans lequel une fréquence du laser accordable est ajustée en fonction du saut de mode à venir détecté,
- dans lequel ledit saut de mode à venir du laser accordable (201, 207) est détecté par la surveillance d'un bruit de phase et/ou d'un bruit d'amplitude du laser accordable, et
- dans lequel ledit saut de mode à venir du laser accordable (201, 207) est détecté par la surveillance d'un taux d'erreur binaire.

2. Le procédé selon la revendication 1, dans lequel ledit saut de mode à venir du laser accordable (201) est détecté par au moins une des étapes suivantes :
- par la surveillance d'un signal de commande d'une boucle de Costas et/ou de toute boucle de suivi de porteuse,
- par la surveillance d'un bruit d'amplitude par l'intermédiaire d'une photodiode,
- par la surveillance d'un signal réfléchi et mélangé avec de la lumière provenant de l'oscillateur local dans le domaine électrique, plus particulièrement dans un domaine de fréquence électrique,
- par la surveillance d'une puissance électrique au niveau d'une plage de bande passante qui ne chevauche pas le signal.

3. Le procédé selon l'une quelconque des revendications précédentes, dans lequel l'OLT est informé du saut de mode à venir après que l'événement ait été détecté.

4. Le procédé selon la revendication 3, dans lequel l'OLT conserve en mémoire tampon des données jusqu'à ce que la fréquence du laser accordable (201) soit ajustée.

5. Le procédé selon l'une quelconque des revendications précédentes, dans lequel la fréquence du laser accordable (201) est ajustée par l'intermédiaire d'un ajustement grossier et d'un réglage fin subséquent de ladite fréquence.

6. Le procédé selon l'une quelconque des revendications précédentes, dans lequel la fréquence du laser accordable (201) est ajustée au moyen d'au moins une des étapes suivantes :
- l'ajustement d'un mode d'un filtre (205) du laser accordable (201),
- l'ajustement d'un courant du laser accordable (201),
- l'ajustement d'une température du laser accordable (201).

7. Le procédé selon l'une quelconque des revendications précédentes, dans lequel l'élément de réseau optique est une ONU ou un OLT.

8. Un élément de réseau optique comprenant
- un laser accordable (201),
- un détecteur de saut de mode (208) qui est agencé de façon à détecter un événement d'un saut de mode à venir du laser accordable (201),
- une unité de commande de réglage (207) qui est utilisée pour l'ajustement d'au moins un paramètre du laser accordable (201) et
dans lequel le détecteur de saut de mode (208) et/ou l'unité de commande de réglage (207) sont configurés de sorte qu'un saut de mode à venir du laser accordable (201) soit détecté par la surveillance d'un taux d'erreur binaire, et l'unité de commande de réglage (207) peut ajuster la fréquence de laser à temps avant le saut de mode effectif.

9. Un système de communication optique comprenant au moins un élément de réseau optique selon la revendication 8.
